(19) Europäisches Patentamt
European Patent Office
Office européen des brevets

(11) **EP 1 666 923 A1**

(12) **DEMANDE DE BREVET EUROPEEN**

(43) Date de publication:
**07.06.2006 Bulletin 2006/23**

(51) Int Cl.:
***G01V 3/08*** *(2006.01)*

(21) Numéro de dépôt: **05111455.1**

(22) Date de dépôt: **29.11.2005**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité: **01.12.2004 FR 0452831**

(71) Demandeur: **COMMISSARIAT A L'ENERGIE ATOMIQUE**
**75752 Paris Cedex 15 (FR)**

(72) Inventeurs:
• **LAFOREST, Pierre**
**38100, GRENOBLE (FR)**
• **MANET, Pascal**
**13770, VENELLES (FR)**

(74) Mandataire: **Poulin, Gérard et al**
**Société BREVATOME**
**3, rue du Docteur Lancereaux**
**75008 Paris (FR)**

(54) **Procédé de localisation de cibles magnétiques mobiles**

(57) L'invention concerne un procédé de localisation d'une cible magnétique mobile (2), à l'aide de mesures magnétiques, comportant :

a) la détermination d'une première et d'une deuxième positions (P1 et P2), et d'une première vitesse possible (V) de la cible (2) selon une première direction (Y),

b) la détermination d'une troisième position, sur une trajectoire (28) définie par rapport à la première direction, en fonction de la première vitesse possible (V) et d'un instant ultérieur,

c) la détermination de la position approchée de la cible, et de sa vitesse, en fonction des première, deuxième et troisième positions.

FIG. 9

**EP 1 666 923 A1**

**Description**

## DOMAINE TECHNIQUE ET ART ANTÉRIEUR

Dans le domaine de la localisation sous marine, les méthodes les plus souvent employées sont des méthodes acoustiques, comme celles utilisant les sonars. Les ondes sonores on en effet la propriété de bien se propager sous l'eau. Néanmoins, bien que ces sonars aient une portée relativement grande, lorsqu'ils sont embarqués à bord de sous-marins ou sur des bouées, ils sont très peu mobiles. Les méthodes acoustiques sont cependant les plus employées. Les autres méthodes se basent principalement sur la détection d'anomalies magnétiques.

Les méthodes de localisation de dipôles magnétiques sont très souvent basées sur des réseaux de capteurs fixes.

Le document US 5387853 propose une méthode permettant de détecter, localiser et déterminer l'orientation du dipôle, et ce grâce à un réseau de capteurs fixes ou à un seul capteur se déplaçant dans l'espace. Le principal défaut de cette méthode est qu'elle n'est valable que pour des cibles fixes et ne prend pas en compte des cibles mobiles.

Le brevet US 5684396 permet de calculer la position et la vitesse d'un dipôle magnétique mobile grâce à un réseau de sondes fixes. En partant d'une première hypothèse sur la trajectoire cible, on calcule le champ que mesureraient les capteurs si la cible était vraiment sur cette trajectoire. La différence entre ce champ et le champ réellement mesuré conduit à une deuxième hypothèse sur la trajectoire et on boucle ainsi jusqu'à obtenir la trajectoire qui correspond le mieux au champ mesuré. Une fois encore, cette méthode utilise un réseau de capteurs fixes pour surveiller une zone.

Le brevet n°US 6292758 permet de déterminer une trajectoire grâce à un réseau de sondes fixes et à un traitement par filtrage de Kalman.

Toutes ces méthodes utilisent un réseau de sondes fixes pour surveiller une région ; encore faut-il que la cible traverse ce réseau.

Les méthodes basées sur la détection magnétique aéroportée sont peu nombreuses. La plus utilisée est la méthode MAD (pour « Magnetic Anomaly Detection »).

Cette méthode est plus employée dans un cadre de relocalisation. En d'autres termes, une cible a déjà été détectée par d'autres moyens (sonars par exemple) et on effectue alors plusieurs passages dans un but de confirmation de la présence et de la position de la cible.

Elle est aussi employée pour estimer le moment magnétique des submersibles français.

A ce moment-là, la cible est fixe et sa position est connue par l'avion de reconnaissance. Celui-ci effectue alors plusieurs passages exactement au-dessus de la cible et, connaissant le module du champ magnétique, il peut alors remonter à l'information de module du moment magnétique de la manière suivante :

$$\left\|\vec{B}(P)\right\| = \frac{\mu_0}{4\pi} \cdot \frac{\left\|\vec{M}\right\|}{r^3} \quad \Leftrightarrow \quad \left\|\vec{M}\right\| = \frac{4.\pi.r^3}{\mu_0} \left\|\vec{B}(P)\right\|$$

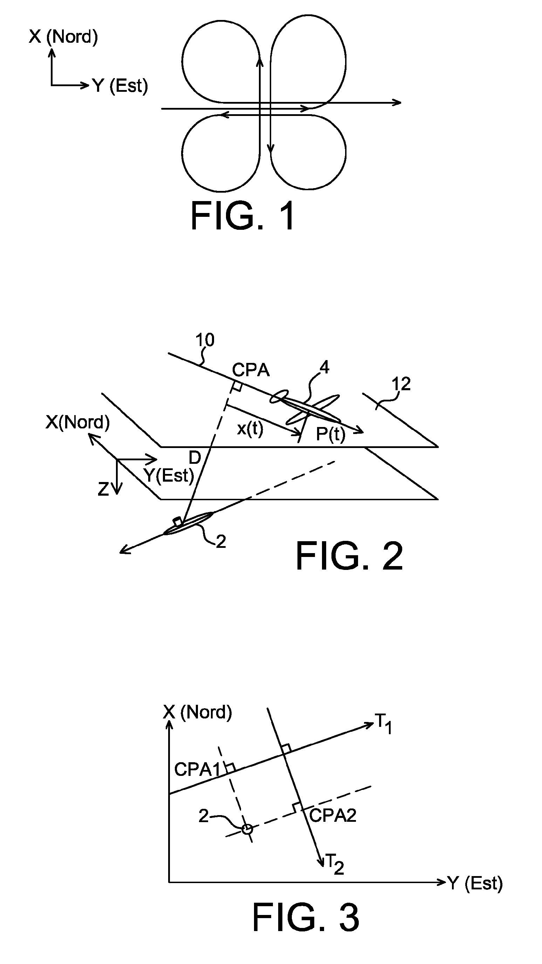

La stratégie de passage employée consiste en ce qu'on appelle un passage en trèfle. L'avion effectue quatre passages successifs selon les quatre caps cardinaux au-dessus de la cible. Sa trajectoire est celle illustrée en figure 1.

En terme de relocalisation, on utilise le fait que la cible appartient au plan d'approche minimale au moment du CPA.

On appelle CPA un lieu géométrique particulier, le point d'approche minimal (i.e. Closest Point of Approach, point d'approche le plus proche). C'est le point de la trajectoire qui est le plus proche de la cible. La distance minimale d'approche est souvent appelée D. La figure 2 représente la trajectoire d'un avion 4 et d'une cible 2, ainsi que le CPA.

Si l'avion effectue deux passages rectilignes, la cible se situe à l'intersection de deux plans, dits plans d'approche minimale, comme le montre la figure 3.

La localisation est alors valable à condition que la cible soit immobile. L'intersection des deux plans n'a aucun sens si la cible s'est déplacée entre les deux passages. On comprend alors que cette méthode n'est valable que pour des cibles « coopérantes ».

Il n'existe donc pas de méthode de localisation pure qui soit rapide, et qui ne parte d'aucune hypothèse de position.

Il se pose donc le problème de mettre au point une stratégie de localisation magnétique aéroportée qui permettrait de localiser une cible non plus fixe mais en mouvement, grâce à l'avion et à ses capacités de recherche rapide.

2

**EXPOSÉ DE L'INVENTION**

L'invention concerne la localisation sous-marine par mesure du champ magnétique.

En effet, on peut considérer un sous-marin comme un dipôle magnétique (c'est-à-dire un gros aimant). La présence de cet aimant dans le champ magnétique terrestre engendre une anomalie locale qui peut être identifiée en mesurant le module du champ magnétique.

L'invention concerne d'abord un procédé de localisation d'une cible magnétique mobile, à l'aide de mesures magnétiques, comportant :

a) - la détermination d'une première et d'une deuxième positions, et d'une première vitesse possible de la cible, selon une première direction,

b) - la détermination d'une troisième position, sur une trajectoire définie, par rapport à la première direction, en fonction de la première vitesse possible et d'un instant ultérieur,

c) - la détermination de la position approchée de la cible, et de sa vitesse, en fonction des première, deuxième et troisième positions.

La trajectoire définie, par rapport à la première direction, en fonction de la première vitesse possible et d'un instant ultérieur, permet la détermination d'une troisième position de la cible.

Un tel procédé peut comporter :

- des mesures du champ magnétique selon la première direction,
- des mesures du champ magnétique selon une deuxième direction, opposée à la première,
- le calcul de la composante de vitesse de la cible selon la première ou la deuxième direction, et le calcul de la position théorique de la cible en fonction de cette composante de vitesse, à un instant ultérieur théorique,
- des mesures du champ selon ladite trajectoire, définie en vue de la détermination de la troisième position de la cible,
- la détermination d'un instant $t'_3$ et de la troisième position $P_3$.

Un procédé selon l'invention peut comporter la détermination :

- d'un instant t1, associé à la première position P1, et de la valeur D1 de la distance entre P1 et la cible,
- d'un instant t2 associé à la deuxième position P2, et de la valeur D2 de la distance entre P2 et la cible.

La trajectoire, définie en vue de la détermination de la troisième position de la cible, peut être perpendiculaire à la première et à la deuxième directions.

L'étape c) est par exemple une étape d'optimisation, par exemple encore par minimisation.

Un procédé selon l'invention peut en outre comporter la mesure du champ à un instant t4, selon une direction, par exemple opposée à la trajectoire définie en vue de la détermination de la troisième position, et en un quatrième point.

Les mesures magnétiques peuvent être réalisées à l'aide d'une sonde à Hélium 4.

Les points de mesure sont les points d'approche minimale pour chacune des trajectoires, ils peuvent être déterminés par filtrage.

La cible peut être un sous - marin.

La détection peut être réalisée à l'aide d'un aéronef.

L'invention concerne également un dispositif de localisation d'une cible magnétique mobile, comportant :

a) - des moyens de mesures magnétiques, de type scalaire,

b) - des moyens de filtrage adapté de signaux provenant des moyens de mesure magnétique,

c) - des moyens de détermination de la position approchée de la cible, et de sa vitesse, en fonction des données, provenant des moyens de filtrage, relatives à une première, une deuxième et une troisième positions.

Ces trois positions sont des positions, par exemple des moyens de mesure magnétique, identifiant, ou correspondant à, une donnée magnétique particulière, par exemple un maximum du signal des moyens de mesures magnétiques.

La troisième position est par exemple située le long d'une trajectoire déterminée en fonction d'une première vitesse possible de la cible selon une première direction.

Les moyens de mesures magnétiques peuvent avantageusement comporter une sonde magnétique scalaire, par exemple une sonde magnétique à Hélium 4.

De préférence les moyens de détermination de la position approchée et de la vitesse comportent des moyens d'optimisation de données provenant des moyens de filtrage.

Les moyens d'optimisation peuvent être des moyens de minimisation.

Selon l'invention, on peut équiper un avion de reconnaissance d'une sonde magnétique scalaire, c'est-à-dire une sonde qui mesure le module du champ magnétique.

Pratiquement, un procédé de détection selon l'invention met en oeuvre un tel avion, qui peut effectuer des passages rectilignes au-dessus de la mer afin de détecter cette anomalie magnétique.

L'invention permet de localiser des cibles mobiles, c'est-à-dire qu'elle permet de connaître le cap, la vitesse et la profondeur de la cible.

Un avantage de l'invention, par rapport aux techniques connues, est de ne mettre en oeuvre qu'un seul capteur mobile, notamment embarqué à bord d'un avion de reconnaissance, donc avec une grande capacité de projection.

L'invention permet aussi de pouvoir localiser des cibles mobiles.

L'invention est un procédé de localisation pure, c'est-à-dire où l'on ne sait rien a priori de la cible.

**BRÈVE DESCRIPTION DES DESSINS**

- La figure 1 représente une technique de relocalisation connue,
- les figures 2 - 5 expliquent une technique de localisation par identification de points d'approche minimale,
- les figures 6 - 12 représentent diverses étapes de procédés selon l'invention,
- les figures 13 représentent des étapes d'un procédé selon l'invention,
- la figure 14 représente schématiquement un dispositif selon l'invention.

**EXPOSÉ DÉTAILLÉ DE MODES DE RÉALISATION PARTICULIERS**

L'invention propose un procédé de localisation qui permet d'estimer la trajectoire d'une cible ayant des propriétés magnétiques ou assimilable à un dipôle magnétique, comme par exemple un sous-marin.

Des moyens de détection magnétique, tels qu'une sonde magnétique, sont à cette fin mis en oeuvre.

De tels moyens peuvent être embarqués à bord d'un aéronef, par exemple un avion de reconnaissance. Ces moyens sont donc mobiles.

On ne connaît pas du tout la position à priori de la cible. On suppose pour cela que la cible est animée d'un mouvement rectiligne uniforme, ce qui est bien le cas et caractérise bien le mouvement dans l'exemple du sous-marin.

Dans la suite, on considère la cible comme un dipôle magnétique. Dans le cas du sous-marin, cette hypothèse correspond en fait à un modèle prédéfini appelé le modèle classe OTAN qui défini plusieurs valeurs d'intensité du dipôle pour différents types de sous-marins.

Le fait de considérer un sous-marin comme un dipôle simplifie l'expression du champ créé en un point de l'espace par ce dipôle.

Cette hypothèse est vérifiée quand on passe à une distance au moins deux fois supérieure à la longueur caractéristique de la cible : un sous-marin peut avoir une longueur inférieure à par exemple 100 m et, dans la cadre de la détection aéroportée, compte tenu de l'altitude de l'avion (de l'ordre de 100 m), on se situe le plus souvent dans le cadre de cette hypothèse.

En première approximation, on peut donc écrire le module du champ magnétique en un point P créé par le dipôle en O comme ceci :

$$\left\| \vec{B}(P) \right\| = \frac{\mu_0}{4\pi} \cdot \frac{\left\| \vec{M} \right\|}{r^3}$$

où $\vec{r} = \dfrac{\overrightarrow{OP}}{\left\| \overrightarrow{OP} \right\|} = \dfrac{\overrightarrow{OP}}{r}$ et $\mu_0 = 4\pi.10^{-7}$ m.kg.C$^{-2}$ est la perméabilité du vide.

Notons que la décroissance du champ est en $1/r^3$, ce qui signifie que la portée d'une sonde magnétique est très courte (inférieure à 1 km).

Le procédé de l'invention peut s'appliquer à des déterminations de points quelconques de l'espace, en particulier situés sur ou associés à, une trajectoire. Mais il est plus avantageux de travailler avec des CPA.

Cette notion de CPA, déjà évoquée ci-dessus, va maintenant être développée.

On suppose que l'espace est muni de repère direct (O, X, Y, Z) tel que O est un point fixe au niveau de la mer, $\vec{X}$ pointe vers le Nord géographique, $\vec{Y}$ vers l'Est et donc $\vec{Z}$ vers le centre de la Terre (figure 2).

Notons que les axes $\vec{X}$ et $\vec{Y}$ sont inversés par rapport au sens commun.

On supposera que la cible 2 est animée d'un mouvement rectiligne uniforme à profondeur constante, avec en particulier z ≥ 0.

Le système de mesure embarqué se déplace, lui, selon une droite 10 appartenant à un plan horizontal 12 (figure 2).

Son altitude est constante à z < 0.

On définit également le plan d'approche minimale (PAM), qui est le plan perpendiculaire à la trajectoire 10, et contenant la cible 2 et le CPA.

La figure 2 illustre les représentations des trajectoires de l'avion 4, de la cible 2, et du CPA.

A partir du module du champ magnétique mesuré, on remonte à l'information du CPA et la valeur de D (distance entre la cible 2 et le CPA) à l'aide de moyens de filtrage, tels qu'un filtre adapté.

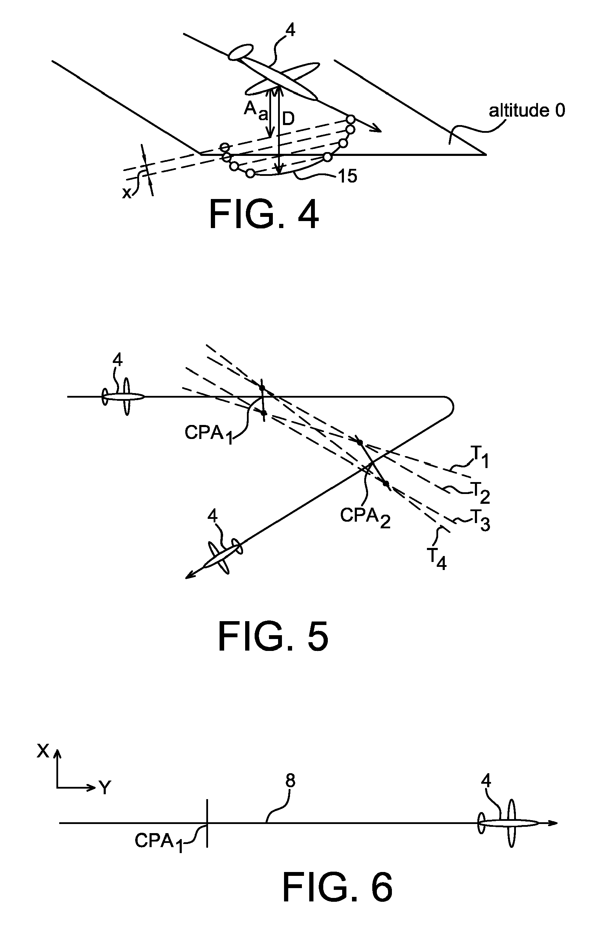

Connaissant la position du CPA et la valeur de D, on a alors un ensemble de points où peut se trouver la cible : au moment où l'avion est situé au CPA, on sait que la cible est située sur un arc de cercle 15 (figure 4), sous le niveau de la mer, perpendiculairement à la trajectoire 10 de l'avion, de centre le point CPA et de rayon D. En effet, la cible se situe à l'intersection du plan d'approche minimale et d'une calotte sphérique de rayon D et de centre le CPA.

Un arc de cercle représente une infinité de points. Pour régler ce problème, on choisit de discrétiser la profondeur du sous-marin, à x mètres près, par exemple x = 10 m, comme illustré sur la figure 4. L'ensemble de ces points possibles pour la cible est donc un nombre entier de couples de points, situés sur l'arc de cercle 15 et espacés de x m verticalement.

Lorsqu'un aéronef 4 effectue deux passages rectilignes, comme illustré sur la figure 5, il enregistre un CPA au cours de chacun de ses passages (CPA1 et CPA2).

Or, on sait qu'il existe un couple de points-solutions par niveau de profondeur et pour chaque CPA, ce qui fait 4 trajectoires solutions possibles pour la cible 2.

Pour tous les niveaux de profondeur, on a donc un faisceau de trajectoires possibles T1, T2, T3, T4 pour la cible, ce qui donne une idée de la trajectoire réelle, comme le montre la figure 5.

Selon l'invention l'avion 4 de reconnaissance effectue un premier balayage rectiligne, ou un premier passage selon une première trajectoire 8 au-dessus de la mer, comme illustré en figure 6, et, au cours de ce passage, détecte une signature magnétique, en d'autres termes un CPA1.

Lorsque l'opérateur de bord décide que le signal est suffisamment fort, c'est-à-dire que l'estimation est suffisamment juste pour engager une recherche, un CPA (CPA1) est détecté, à un instant t1.

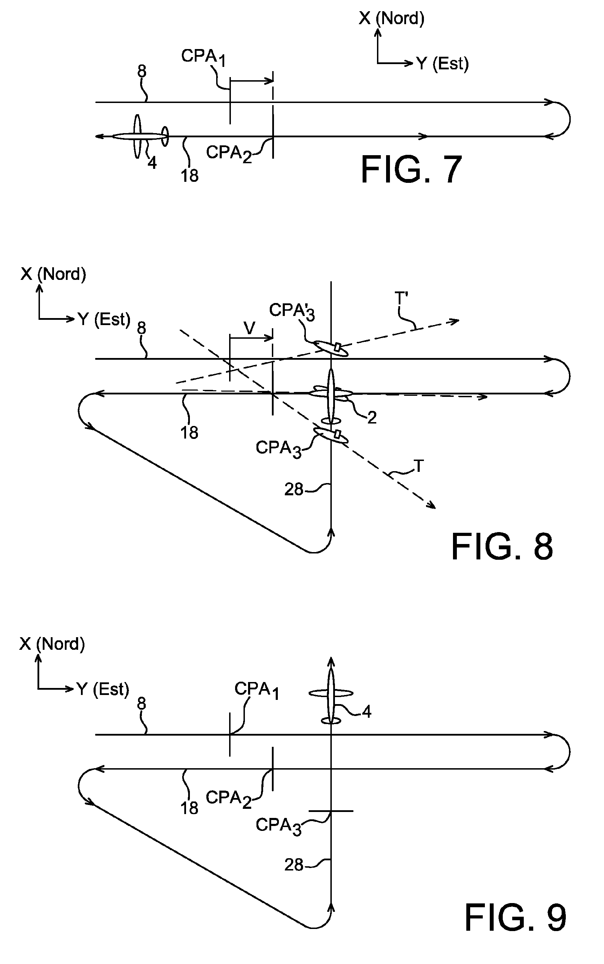

L'avion effectue alors un demi-tour et fait un second passage 18 parallèlement au premier passage, mais en sens inverse (figure 7). Il détecte, à un instant t2, un deuxième CPA, que l'on appelle $CPA_2$. Connaissant le temps t2 - t1 écoulé entre les deux CPA, on peut estimer la projection de la vitesse de la cible sur l'axe de la trajectoire de l'avion (ici Est-Ouest). Par conséquent, dès la fin du deuxième passage, on a déjà une information sur une composante de la vitesse de la cible.

On formule alors l'hypothèse que le sous-marin évolue à une vitesse V égale à cette composante dans l'axe du deuxième passage.

L'avion va effectuer ensuite un 3ème passage ou va se diriger suivant une troisième trajectoire. Ce troisième passage ou cette troisième trajectoire est représenté orthogonalement à Y sur la figure 8, mais il pourrait croiser Y selon un autre angle ou une autre inclinaison.

L'ordonnée (selon l'axe Y) de ce troisième passage 28 est calculée de sorte que, si la cible 2 évolue effectivement sur l'axe du deuxième passage à la vitesse V, on la survolera exactement, au-dessus de Y, au cours du troisième passage, à un certain instant t3.

En d'autres termes, l'ordonnée du troisième passage ou de la troisième trajectoire est telle que, quand l'avion croisera l'axe du deuxième passage 18, la cible 2 se situera, à un instant ultérieur t3, en supposant exacte l'hypothèse sur la trajectoire de la cible 2, sur l'axe du troisième passage, comme le montre la figure 8.

En fait, au cours de ce troisième passage, l'avion va sans doute enregistrer ou détecter un autre CPA (CPA3 ou CPA3'), à un instant t'3. Ce CPA3 ne sera détecté, ni à l'instant prévu t3, ni à l'endroit prévu par l'hypothèse (figure 8), cet endroit prévu étant sur la direction Y.

Grâce à ces trois passages, il va être cependant possible d'estimer approximativement la trajectoire réelle de la cible (T ou T' sur la figure 8).

Rappelons que pour chaque CPA, la cible se situe sur un arc de cercle de centre le CPA et de rayon D dans le plan d'approche minimale.

A la suite du troisième passage, on dispose donc de trois ensembles de points de passage probables du sous-marin (un ensemble pour chaque CPA : voir figure 9).

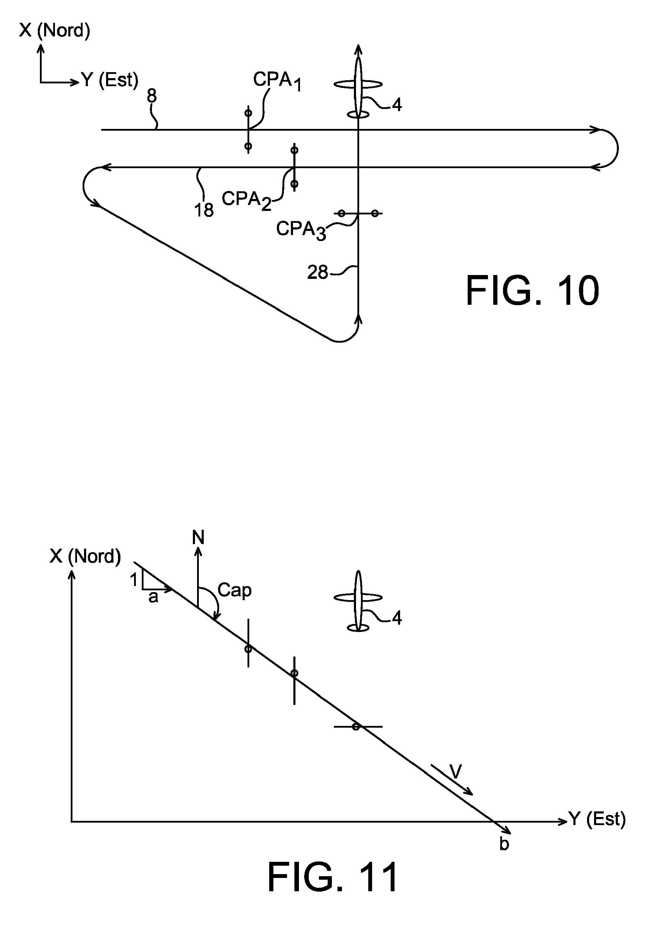

Par niveau de profondeur, il y aura deux points par CPA, soit, pour trois CPA, $2^3 = 8$ chemins possibles (figure 10).

Parmi ceux-là, on va chercher celui dont les trois points sont les plus alignés, c'est-à-dire le chemin qui correspondrait le mieux à un mouvement rectiligne uniforme. Et pour caractériser cet alignement, on peut utiliser une méthode de minimalisation, par exemple une méthode de type moindres carrés (figure 11).

Cette méthode fournit un chemin, qui comprend les points les plus alignés, au sens par exemple des moindres carrés, mais aussi la donnée du cap, à travers le coefficient directeur a de la droite associée aux trois points (voir figure 11).

Connaissant les trois points de passage estimés ainsi que les temps associés (t1, t2 et t'3), on en déduit une estimation de la vitesse vraie de la cible sur sa trajectoire. D'autre part, le niveau de profondeur auquel appartient le chemin désigné par le critère de minimalisation indique la profondeur de la cible.

On a ainsi une première information complète sur l'évolution de la cible.

A ce stade, ce procédé fournit de très bons résultats, issus du premier calcul de minimisation. L'estimation issue du troisième passage est donc déjà très fiable.

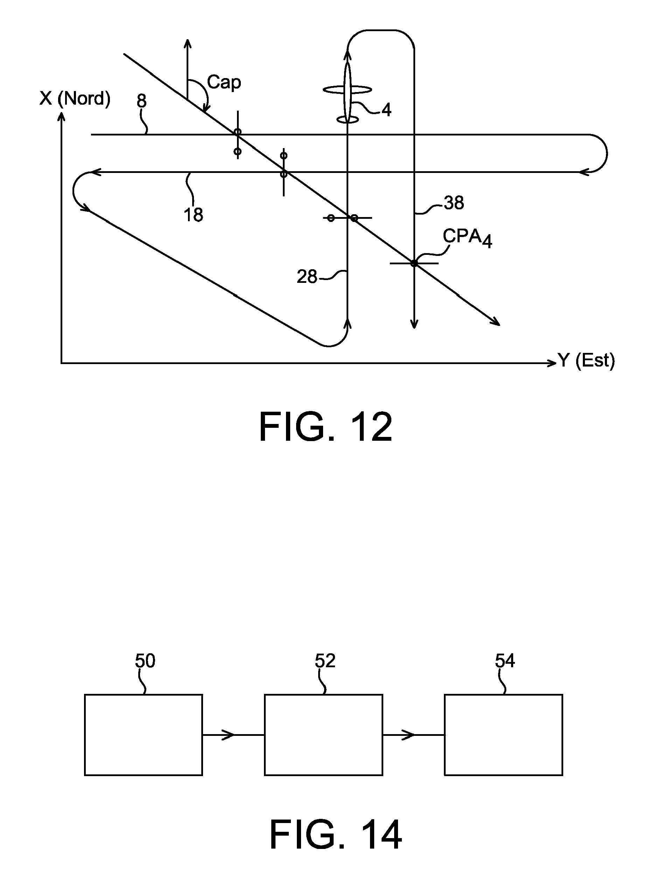

Cependant les données de cap et de vitesse estimées ou calculées vont permettre de calculer un quatrième passage 38 au-dessus de la cible (figure 12), de sorte que l'on espère passer vraiment à la verticale de celle-ci. Ce quatrième passage sera par exemple parallèle et opposé au troisième, à la suite d'un demi-tour.

Au cours de ce passage, on enregistre un quatrième CPA (CPA4), proche de l'endroit où on l'attendait (figure 12). Il donne donc un autre ensemble de points.

Afin d'affiner l'estimation de la trajectoire cible, on peut refaire un calcul de minimalisation, avec maintenant quatre ensembles de points associés aux 4 CPA, ce qui fera $2^4 = 16$ chemins possibles par niveau de profondeur.

Il est possible d'intégrer au sein de ce procédé l'hypothèse d'une cible immobile. En effet, si les trois premiers CPA sont à peu près dans la même zone géographique, il suffit alors de court-circuiter l'algorithme de minimalisation, qui n'est plus d'aucune utilité, et d'effectuer un quatrième passage dans la même zone pour confirmer la position de la cible. On peut ensuite effectuer une moyenne en abscisse et en ordonnée pour estimer la position du sous-marin.

Le principal avantage de cette méthode est qu'elle peut localiser des cibles mobiles et donc des cibles à priori hostiles (par exemple en fuite), contrairement au procédé MAD actuel.

On n'utilise qu'un seul capteur associé à la grande capacité de déplacement d'un avion, et non un réseau de sondes fixes.

Cette méthode a en outre l'avantage d'être rapide : une manoeuvre complète dure de l'ordre d'une dizaine de minutes pour un avion volant à 200 Km/h par exemple. De plus, on ne suppose rien sur les paramètres de la cible, en particulier sur son moment magnétique, et on se base seulement sur l'anomalie magnétique apportée par la cible dans le champ terrestre.

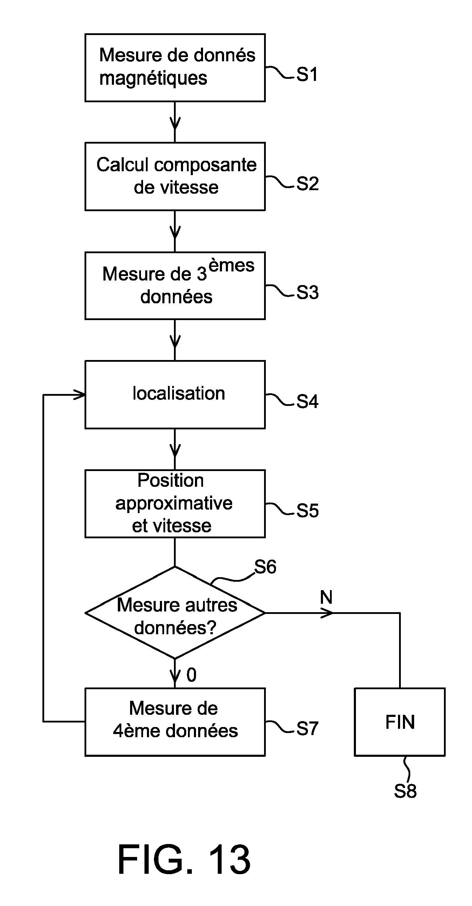

La figure 13 représente des étapes d'un procédé selon l'invention.

Dans une première étape (S1) des données de champ magnétique sont mesurées, par exemple des données de CPA (CPA1 et CPA2).

Dans une deuxième étape (S2), une première composante de vitesse est calculée, ainsi qu'une localisation ou une position théorique de la cible à au moins un instant ultérieur.

On mesure alors les troisièmes données de champ magnétique (S3), en suivant une trajectoire 28 supposée exacte par rapport à la localisation ou à la position théorique.

Une première localisation peut alors être établie (S4).

Si les trois points mesurés coïncident sensiblement, des quatrièmes données magnétiques peuvent éventuellement être mesurées, afin de confirmer ladite localisation.

Sinon, on procède à une approximation de la trajectoire de la cible (S5) en fonction des données mesurées.

L'opérateur a alors le choix de procéder, ou non, à la mesure d'autres données (S6).

Si il choisit de mesurer d'autres données, des quatrièmes données magnétiques sont mesurées (S7), afin de confirmer la localisation établie en S4. Ces quatrièmes données sont soumises au même traitement qu'en S4 et S5.

Un dispositif pour mettre en oeuvre un procédé selon l'invention va être décrit en liaison avec la figure 14.

Un tel dispositif sera par exemple embarqué à bord d'un avion de reconnaissance.

Ce dispositif comporte une sonde 50 magnétique, par exemple une sonde scalaire, par exemple une sonde Hélium 4, basée sur le principe du pompage optique de l'hélium 4. On peut aussi utiliser une sonde à hélium 3 ou une sonde RMN.

L'avantage de cette sonde est qu'elle présente un niveau de bruit très faible (~1 pT/sqrt(Hz) alors que l'on relève des signatures magnétiques de l'ordre de quelques 100 pT à quelques 100 nT) sur toute la bande de fréquence utilisée (jusqu'à 500 Hz). Elle est suffisamment compacte pour être installée et exploitée à bord d'un avion de reconnaissance.

Des moyens 52 de filtrage permettent de déterminer à quel endroit est le CPA sur un passage rectiligne de l'avion. On utilise ce que l'on appelle un filtre adapté. Toute signature magnétique peut en fait se décomposer sur trois signatures élémentaires qui constituent la base de Anderson. Le principe du filtre adapté est de projeter le signal utile sur cette base, le résultat étant une énergie de projection dont le maximum indique la position du CPA.

Une telle méthode est décrite dans la thèse de Y. Caritu « Système de détection/localisation de mobile ferromagnétique par un réseau de magnétomètres haute sensibilité », soutenue le 25 juin 1996, Institut National Polytechnique de Grenoble.

Des moyens 54 de calcul vont permettre d'effectuer les calculs d'optimisation ou de minimisation pour estimer la trajectoire réelle de la cible.

Ces moyens comportent par exemple un microordinateur programmé pour mettre en oeuvre des étapes d'un tel traitement de données, par exemple des étapes du procédé décrit ci-dessus, notamment en relation avec la figure 13.

On a vu qu'après le troisième passage, on a 8 chemins possibles par niveau de profondeur (et 16 chemins après le quatrième passage). Pour déterminer la trajectoire cible, on utilise un critère de minimalisation qui donne le chemin qui correspond le mieux à un mouvement rectiligne.

Pour cela, on peut retenir un critère de moindres carrés, qui donne au final l'équation de la droite solution.

Il est aussi possible d'utiliser une méthode de minimalisation autre que les méthodes par moindres carrés.

Le procédé selon l'invention concerne notamment le domaine de la localisation sous-marine, très peu utilisé de manière opérationnelle.

Le procédé et le dispositif selon l'invention permettent de mettre en oeuvre une stratégie inédite de localisation de cibles magnétiques mobiles à partir d'un avion de reconnaissance, sans rien savoir à priori sur la cible.

L'avantage est que l'on peut alors estimer la trajectoire d'une cible mobile grâce à un seul capteur, mobile, et à la capacité de l'avion de couvrir de grandes zones.

On tient compte aussi du fait que la cible peut être mobile. Cette méthode peut donc être utilisable non plus dans un contexte de relocalisation mais bien de localisation pure.

Une différence de l'invention par rapport aux techniques connues, et notamment par rapport à celle décrite dans le document US - 5 387 853, qui utilise des capteurs fixes, est que le procédé et le dispositif selon l'invention mettent en oeuvre un ou des capteurs mobiles.

**Revendications**

1. Procédé de localisation d'une cible magnétique mobile (2), à l'aide de mesures magnétiques, comportant :

    a) - la détermination d'une première et d'une deuxième positions (P1 et P2), et d'une première vitesse possible (V) de la cible (2) selon une première direction (Y),
    b) - la détermination d'une troisième position, sur une trajectoire (28) définie par rapport la première direction, en fonction de la première vitesse possible (V) et d'un instant ultérieur,
    c) - la détermination de la position approchée de la cible, et de sa vitesse, en fonction des première, deuxième et troisième positions.

2. Procédé selon la revendication 1, comportant :

    - des mesures du champ magnétique B1 selon la première direction,
    - des mesures du champ magnétique B2 selon une deuxième direction, opposée à la première,
    - le calcul de la composante (V) de vitesse de la cible selon la première ou la deuxième direction, et de la position théorique de la cible, en fonction de cette composante de vitesse, à un instant ultérieur théorique t3,
    - des mesures du champ B3 selon ladite trajectoire, définie, par rapport à la première direction, en fonction de la première vitesse possible (V) et de t3,
    - la détermination, à un instant réel t'3, d'une troisième position P3.

3. Procédé selon la revendication 2, comportant en outre la détermination :

    - d'un instant t1 associé à la première position P1 et de la valeur D1 de la distance entre P1 et la cible,
    - d'un instant t2 associé à la deuxième position P2, et de la valeur D2 de la distance entre P2 et la cible.

4. Procédé selon l'une des revendications 1 à 3, la trajectoire, définie, par rapport à la première direction, en fonction de la première vitesse possible (V) et d'un instant ultérieur t3, étant perpendiculaire à la première direction.

5. Procédé selon l'une des revendications 1 à 4, l'étape c) étant une étape d'optimisation.

**6.** Procédé selon la revendication 5, l'étape c) étant réalisée par minimisation.

**7.** Procédé selon la revendication 6, l'étape d'optimisation étant réalisée par la méthode des moindres carrés.

**8.** Procédé selon l'une des revendications 1 à 7, comportant des mesures du champ B4 selon une trajectoire opposée à la trajectoire (28) définie, par rapport à la première direction, en fonction de la première vitesse possible (V) et dudit instant ultérieur t3.

**9.** Procédé selon la revendication 8, comportant en outre une étape de détermination d'un instant t4 associé à un point P4 et de calcul de la distance D4 entre P4 et la cible.

**10.** Procédé selon l'une des revendications 1 à 8, les mesures magnétiques étant réalisées à l'aide d'un magnétomètre scalaire.

**11.** Procédé selon la revendication 10, les mesures étant réalisées à l'aide d'une sonde à Hélium 4.

**12.** Procédé selon l'une des revendications 1 à 11, les points déterminés Pi étant les points les plus proches de la cible (CPAi) pour chacune des trajectoires.

**13.** Procédé selon la revendication 12, les points les plus proches de la cible étant déterminés par filtrage adapté.

**14.** Procédé selon l'une des revendications 1 à 13, la cible étant un sous-marin.

**15.** Procédé selon l'une des revendications 1 à 14, la cible étant détectée à l'aide d'un aéronef.

**16.** Dispositif de localisation d'une cible magnétique mobile, comportant :

a) - des moyens (50) de mesures magnétiques,
b) - des moyens (52) de filtrage adapté de signaux provenant des moyens (50) de mesure magnétique,
c) - des moyens de détermination de la position approchée de la cible, et de sa vitesse, en fonction des données, provenant des moyens de filtrage, relatives à une première, une deuxième et une troisième positions.

**17.** Dispositif selon la revendication 16, la troisième position étant située le long d'une trajectoire (28) définie, par rapport à une première direction, en fonction d'une première vitesse possible (V) de la cible le long de cette première direction et d'un instant ultérieur t3.

**18.** Dispositif selon la revendication 16 ou 17, les moyens de mesures magnétiques comportant une sonde magnétique.

**19.** Dispositif selon la revendication 18, les moyens de mesures magnétiques comportant une sonde magnétique scalaire.

**20.** Dispositif selon la revendication 19, la sonde étant une sonde à Hélium 4.

**21.** Dispositif selon l'une des revendications 16 à 20, les moyens de détermination de la position approchée et de la vitesse comportant des moyens (54) d'optimisation de données provenant des moyens de filtrage (52).

**22.** Dispositif selon l'une des revendications 16 à 21, les moyens d'optimisation étant des moyens de minimisation.

**23.** Procédé selon l'une des revendications 1 à 15, les mesures magnétiques étant réalisées à l'aide de moyens de détection ou à l'aide d'un capteur, mobiles par rapport à la cible (2).

FIG. 1

FIG. 2

FIG. 3

FIG. 4

FIG. 5

FIG. 6

FIG. 7

FIG. 8

FIG. 9

FIG. 10

FIG. 11

X (Nord)

8

Cap

4

18

38

CPA₄

28

Y (Est)

# FIG. 12

50

52

54

# FIG. 14

FIG. 13

**Office européen
des brevets**

**RAPPORT DE RECHERCHE EUROPEENNE**

Numéro de la demande

EP 05 11 1455

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 6 675 123 B1 (EDELSTEIN ALAN S) 6 janvier 2004 (2004-01-06) * colonne 4, ligne 3 - colonne 6, ligne 50 * ----- | 1 | G01V3/08 |
| D,X | US 5 684 396 A (AKS ET AL) 4 novembre 1997 (1997-11-04) | 16,18-22 | |
| A | * colonne 2, ligne 48 - colonne 3, ligne 35 * ----- | 1 | |

**DOMAINES TECHNIQUES RECHERCHES (IPC)**

G01V

Le présent rapport a été établi pour toutes les revendications

| Lieu de la recherche | Date d'achèvement de la recherche | Examinateur |
|---|---|---|
| La Haye | 3 janvier 2006 | Häusser, T |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

................................................................................

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 05 11 1455

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

03-01-2006

| Document brevet cité au rapport de recherche | | Date de publication | Membre(s) de la famille de brevet(s) | | Date de publication |
|---|---|---|---|---|---|
| US 6675123 | B1 | 06-01-2004 | AUCUN | | |
| US 5684396 | A | 04-11-1997 | GB | 2310931 A | 10-09-1997 |
| | | | JP | 2954064 B2 | 27-09-1999 |
| | | | JP | 10019505 A | 23-01-1998 |
| | | | KR | 236249 B1 | 15-12-1999 |
| | | | NO | 970989 A | 08-09-1997 |

EPO FORM P0460

Pour tout renseignement concernant cette annexe : voir Journal Officiel de l'Office européen des brevets, No.12/82